# EUROPEAN PATENT APPLICATION

(11) **EP 4 084 523 A1**
(43) Date of publication of application: **02.11.2022**
(21) Application number: 21171531.3
(22) Date of filing: 30.04.2021
(51) Int. Cl.: H04W 24/02, H04W 4/50, H04L 12/24, H04W 24/08, H04W 88/18

(54) **INTERFACE BETWEEN A SERVICE DESIGN TOOL TO A NETWORK ENTITY**

(71) Applicant: Nokia Technologies Oy, 02610 Espoo (FI)
(72) Inventor: MWANJE, Stephen, 84405 Dorfen (DE); PEREIRA RODRIGUES, Joao Antonio, 1600-097 Lisbon (PT); NEGLE, Klaus, 86899 Landsberg am Lech (DE); GOERGE, Jürgen, 82061 Neuried (DE)
(74) Representative: Style, Kelda Camilla Karen

(57) **Abstract**

An apparatus comprises means configured to: cause information about a set for at least one service to be transmitted from a service design tool to a network entity, the set comprising attributes and one or more values associated with the attributes for the at least one service; receive response information from an entity; modify the set for the at least one service in response to the information received from the entity to provide an updated set of attributes and one or more values associated with the attributes; and cause information about the updated set for the at least one service to be transmitted from the service design tool to the entity.

## Description

### Field of the disclosure

The present disclosure relates to an apparatus, a method, and a computer program and in particular, but not exclusively an apparatus, a method, and a computer program for a service design.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. One examples of a so-called standard is the so-called 5G standard.

### Summary

According to an aspect there is provided an apparatus comprising at least one processor and at least one memory including computer code for one or more programs, the at least one memory and the computer code configured, with the at least one processor, to cause the apparatus at least to: cause information about a set for at least one service to be transmitted from a service design tool to a network entity, the set comprising attributes and one or more values associated with the attributes for the at least one service; receive response information from an entity; modify the set for the at least one service in response to the information received from the entity to provide an updated set of attributes and one or more values associated with the attributes; and cause information about the updated set for the at least one service to be transmitted from the service design tool to the entity.

The information about the set may comprise information identifying the attributes and for each attribute information identifying the one or more associated values.

The response information may comprise information indicating that the service is not supportable.

The response information may comprise information indicating which one or more attributes of the set and/or one or more values associated with the attributes of the set are not supportable.

The information about the set may comprise identity information and the response information may comprise the identity information.

The at least one memory and the computer code may be configured, with the at least one processor, to cause the apparatus at least to: receive a requirements specification and in response provide the information about the set for the at least one service.

The providing of the information may comprise compiling the requirements specification to provide the information.

The information about the set may comprises a service offer descriptor.

The service comprises a network slice instance.

The apparatus may be or provided in a service design tool.

According to an aspect there is provided an apparatus comprising at least one processor and at least one memory including computer code for one or more programs, the at least one memory and the computer code configured, with the at least one processor, to cause the apparatus at least to: receive information, at an entity, about a set for at least one service from a service design tool, the set comprising attributes and one or more values associated with the attributes for the at least one service; causing a response comprising response information to be sent to the service design tool; and receiving, from the service design tool, information about an updated set of attributes and one or more values associated with the attributes.

The information about the set may comprise information identifying the attributes and for each attribute information identifying the one or more associated values.

The at least one memory and the computer code may be configured, with the at least one processor, to cause the apparatus at least to: determine that the service is not supportable, the response information indicating that the service is not supportable.

The response information may comprise information indicating which one or more attributes of the set and/or one or more values associated with the attributes of the set are not supportable.

The information about the set may comprise identity information and the response information may comprise the identity information.

The information about the set may comprise a service offer descriptor for the at least one service.

The service may comprise a network slice instance.

The apparatus may be or provided in an entity. The apparatus may be or provided in end-to-end service management domain entity.

According to another aspect, there is provided an apparatus comprising means configured to: cause information about a set for at least one service to be transmitted from a service design tool to a network entity, the set comprising attributes and one or more values associated with the attributes for the at least one service; receive response information from an entity; modify the set for the at least one service in response to the information received from the entity to provide an updated set of attributes and one or more values associated with the attributes; and cause information about the updated set for the at least one service to be transmitted from the service design tool to the entity.

The information about the set may comprise information identifying the attributes and for each attribute information identifying the one or more associated values.

The response information may comprise information indicating that the service is not supportable.

The response information may comprise information indicating which one or more attributes of the set and/or one or more values associated with the attributes of the set are not supportable.

The information about the set may comprise identity information and the response information may comprise the identity information.

The means may be configured to receive a requirements specification and in response providing the information about the set for the at least one service.

The providing of the information may comprise compiling the requirements specification to provide the information.

The information about the set may comprises a service offer descriptor.

The service comprises a network slice instance.

The apparatus may be or provided in a service design tool.

According to another aspect, there is provided an apparatus comprising means configured to: receive information, at an entity, about a set for at least one service from a service design tool, the set comprising attributes and one or more values associated with the attributes for the at least one service; cause a response comprising response information to be sent to the service design tool; and receive, from the service design tool, information about an updated set of attributes and one or more values associated with the attributes.

The information about the set may comprise information identifying the attributes and for each attribute information identifying the one or more associated values.

The means may be configured to determine that the service is not supportable, the response information indicating that the service is not supportable.

The response information may comprise information indicating which one or more attributes of the set and/or one or more values associated with the attributes of the set are not supportable.

The information about the set may comprise identity information and the response information may comprise the identity information.

The information about the set may comprise a service offer descriptor for the at least one service.

The service may comprise a network slice instance.

The apparatus may be or provided in an entity. The apparatus may be or provided in end-to-end service management domain entity.

According to another aspect, there is provided a method comprising: causing information about a set for at least one service to be transmitted from a service design tool to a network entity, the set comprising attributes and one or more values associated with the attributes for the at least one service; receiving response information from an entity; modifying the set for the at least one service in response to the information received from the entity to provide an updated set of attributes and one or more values associated with the attributes; and causing information about the updated set for the at least one service to be transmitted from the service design tool to the entity.

The information about the set may comprise information identifying the attributes and for each attribute information identifying the one or more associated values.

The response information may comprise information indicating that the service is not supportable.

The response information may comprise information indicating which one or more attributes of the set and/or one or more values associated with the attributes of the set are not supportable.

The information about the set may comprise identity information and the response information may comprise the identity information.

The method may comprise receiving a requirements specification and in response providing the information about the set for the at least one service.

The providing of the information may comprise compiling the requirements specification to provide the information.

The information about the set may comprises a service offer descriptor.

The service comprises a network slice instance.

The method may be performed by an apparatus. The apparatus may be or provided in a service design tool.

According to another aspect, there is provided a method comprising: receiving information, at an entity, about a set for at least one service from a service design tool, the set comprising attributes and one or more values associated with the attributes for the at least one service; causing a response comprising response information to be sent to the service design tool; and receiving, from the service design tool, information about an updated set of attributes and one or more values associated with the attributes.

The information about the set may comprise information identifying the attributes and for each attribute information identifying the one or more associated values.

The method may comprise determining that the service is not supportable, the response information indicating that the service is not supportable.

The response information may comprise information indicating which one or more attributes of the set and/or one or more values associated with the attributes of the set are not supportable.

The information about the set may comprise identity information and the response information may comprise the identity information.

The information about the set may comprise a service offer descriptor for the at least one service.

The service may comprise a network slice instance.

The method may be performed by an apparatus. The apparatus may be or provided in an entity. The apparatus may be or provided in end-to-end service management domain entity.

According to an aspect, there is provided a computer program comprising computer executable instructions which when run on a at least one processor cause the any on of the above methods to be performed

According to an aspect, there is provided a computer readable medium comprising program instructions stored thereon for performing at least one of the above methods. According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### Brief Description of the Figures

Embodiments will now be described, by way of example only, with reference to the accompanying Figures in which:
Figure 1 shows a schematic diagram of an example 5G system with an end-to-end service management domain.
Figure 2 shows a schematic diagram of an example apparatus.
Figure 3 shows schematically the management processes supporting the life cycle management of a communication service.
Figure 4 schematically shows an overview of the network slice life-cycle management operations.
Figure 5 schematically shows a system of some embodiments.
Figure 6 shows a table of an example of a requirements specification.
Figure 7 shows a table of an example of the service offer descriptor.
Figure 8 shows a service design operation flow.
Figure 9 shows a first method of some embodiments.
Figure 10 shows a second method of some embodiments.

### Detailed Description of the Figures

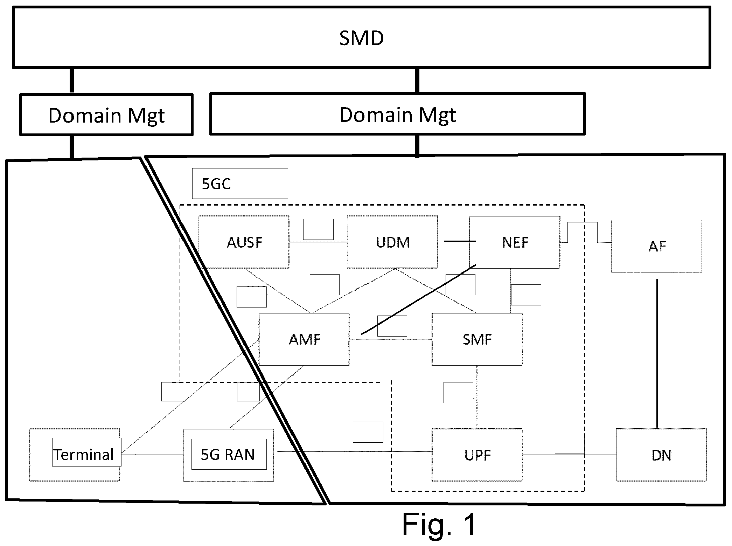

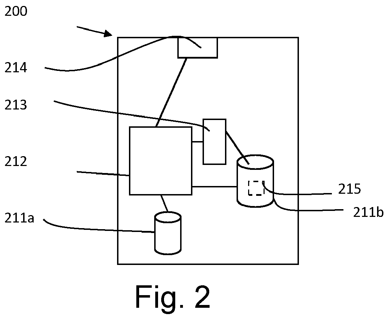

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, are briefly explained with reference to Figures 1 and 2 to assist in understanding the technology underlying the described examples.

Figure 1 shows a schematic representation of a 5G system (5GS) with an end-to-end service management domain (SMD). (The SMD part is described in more detail later). The 5GS may be comprised by a terminal or user equipment (UE), a 5G radio access network (5GRAN) or next generation radio access network (NG-RAN), a 5G core network (5GC), one or more application functions (AF) and one or more data networks (DN).

The 5G-RAN may comprise one or more base stations. In 5G the base station may be referred to as a gNodeB (gNB). The RAN may comprise one or more gNodeB (gNB) (or base station) distributed unit functions connected to one or more gNodeB (gNB) (or base station) centralized unit functions.

The 5GC may comprise the following entities: one or more access management functions (AMF), one or more session management functions (SMF), an authentication server function (AUSF), a unified data management (UDM), one or more user plane functions (UPF), and/or a network exposure function (NEF).

Figure 2 illustrates an example of an apparatus 200. This apparatus may be provided for example in a service design tool or an end-to-end service management entity. The apparatus may comprise at least one memory. By way of example only the at least one memory may comprise random access memory (RAM) 211a and at least on read only memory (ROM) 211b. Apparatus used by other embodiments may comprise different memory.

The apparatus may comprise at least one processor 212, 213. In this example apparatus, two processors are show.

The apparatus may comprise an input/output interface 214.

The at least one processor may be coupled to the at least one memory. The at least one processor may be configured to execute an appropriate software code 215. The software code 215 may for example allow the method of some embodiments to be performed.

The software code 215 may be stored in the at least one memory, for example ROM 211b.

The fifth generation of mobile networks (5G) covers a wide variety of use cases, such as the internet of things (loT) and the industry of the future (Industry 4.0) requiring massive machine type Communication (mMTC). Furthermore, highly safety and security critical use cases like autonomous driving and vehicular communication, including e.g. unmanned aerial vehicle (UAV) control require ultra-reliable and low latency communication (URLLC).Enhanced mobile broadband (eMBB) applications like HD video streaming and augmented reality are also supported. These diverse use cases enforce different requirements on mobile networks.

Network slicing is used in 5G mobile networks to make the networks flexible enough to support those divergent requirements. Network slicing supports different services using the same underlying mobile network infrastructure. Network slices can differ in their service requirements. For example the service requirement may be an ultra-reliable low latency communication (URLLC) service requirement or an enhanced mobile broadband (eMBB) service requirement. Network slices can differ in the tenant that provides those services.

A network slice instance (NSI) is an isolated end-to-end logical network containing all required physical and virtualized resources and network functions to fulfil specific service requirements, for example based on service level agreements (SLAs). Several NSIs may share the same physical and virtualized infrastructure. A network slice instance may be composed of several network slice subnet instances (NSSI).

The lifecycle management of communication services involves multiple management processes that rely on the interaction between an end-to-end service management domain (SMD) and the different technology domains (sometimes referred to as management domains) that work together to fulfil the communication services. This may for example be as specified by the ETSI ZSM framework. For example, this may be ETSI GS ZSM 008: "Zero-touch network and Service Management (ZSM); Cross-domain E2E Service Lifecycle Management ". The current version is V0.5.0 (2021-01). As can be seen from Figure 1, the SMD sits above various domains. The 5G system may be regarded as being made up a "radio domain" and a "core network" domain. Each domain may be associated with a domain management function which sits between the respective domain and the SMD. It should be noted that there may be one or more additional domains provided in some embodiments. In some embodiments, the 5G system may be provided by a single domain.

5G mobile networks may support a variety of use cases that might have very diverse and dynamically changing requirements related to, for instance, throughput, latency, availability, and reliability. The 5G mobile networks may be required to support fast mobile communication service roll out and deployment times.

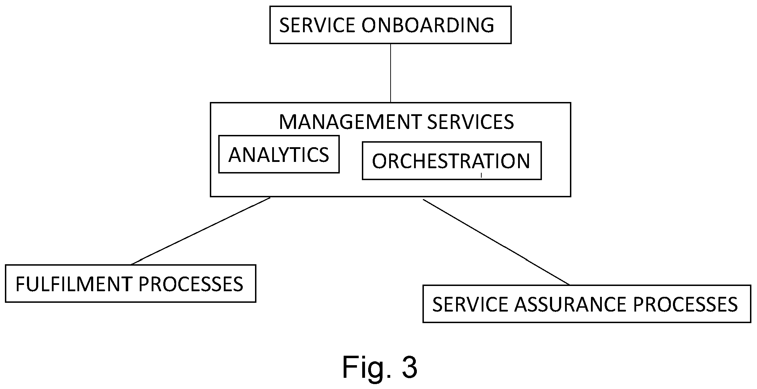

In this regard, reference is made to Figure 3, which shows schematically the management processes supporting the life cycle management of a communication service. The processes include a service onboarding process, a service fulfilment process, a service assurance process, and management services. The management services may include one or more of integration, orchestration, data collection, analytics, data services and intelligence processes. The service fulfilment processes may include service instantiation, service activation, service configuration, service deactivation, service inventory/topology and service decommissioning. The service assurance processes may include service assurance set-up, service quality management and service assurance tear down.

Some embodiments may relate to the service onboarding process. This may be an initial process to get a service registered for later instantiation and use.

Before a service can be instantiated, one or more preliminary processes are needed. This may allow the one or more different parties that contribute to the service to agree on one or more details about the service. For example, considering a network slice instance as an example implementation of an end-to-end communication service, the preparation for a network slice instance comprises the design and onboarding of the network slice.

Network slice Life-Cycle Management (LCM) refers to the management operations required to create and decommission an NSI and to manage and optimize it at runtime.

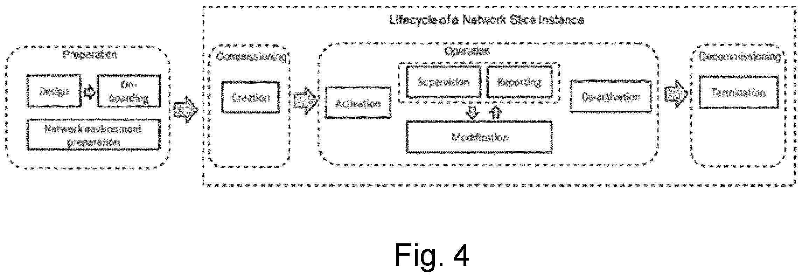

Figure 4 depicts an example overview of the network slice LCM operations.

A first, preparation, stage includes design, on-boarding and network environment preparation. The lifecycle of a NSI includes a commissioning phase (which includes the creation of the network slice), an operation phase (which includes activation and deactivation of the network slice as well as modification in response to supervision and reporting) and a decommissioning phase (which includes the termination of the network slice).

Figure 3 thus schematically shows the different phases for provisioning a NSI (NSSI (network slice subnet instance) creation, NSSI activation; NSSI de-activation, NSSI modification, and NSSI termination.

In more detail, the preparation processes may be as follows:
Service design - the processes and deciding and agreeing on the characteristics of a service including performance characteristics, the operational policies for offering the service as well as the technical characteristics through the service is offered.
Service onboarding - the process of supporting the agreed service as a candidate service that can be deployed, e.g. providing support on the service order platforms, providing the technical descriptions (called service models) to the tools where the related technical resources are to be activated when needed. Service descriptors may be considered as the description of the features visible to the service consumers while service model includes the technical features about how the service shall be implemented, including the service descriptor features
Service instantiation - the process of initiating a specific instance of the service, e.g., for a specific customer. A single designed and onboarded service may be instantiated multiple times e.g. by creating a template which is used each time a new instance is needed.

The implementation of the service offer may be shared between the service provider and the network provider. For example, in some cases, the service provider may rely on two or more network providers to compose the resources needed to offer its services. The network slice instance can then be created. Once created, the network slice instance is activated. When the network slice instance is no longer required, the network slice instance is deactivated.

Currently, the design of the service is an offline task in which:
1. The service provider defines the service. For example, this may be what is to be provided from customer point of view.
2. The service provider provides the service design to the network provider
3. The network provider uses the service design as input to implement a unique service in the network or to create templates that are the basis of the service that can be implemented multiple times in the network.

Some embodiments may provide an interface to support the service design process. This interface may standardize communications between for example, a service provider entity and a network provider entity. The interface may be an open interface to allow interoperability of components from different vendors. This may allow for the use of interactive communication between the respective entities while designing the service. The network and service providers may use the open interface over which they can agree on the nature and characteristics of the service to be offered.

Some embodiments relate to the support of the sharing of the service design between two parties. These two parties may be a network provider and a service provider. Some embodiments may provide a data model and specific flow which would allow an integration point to be available for all vendors.

The service design phase may be an important part of the lifecycle phase in some scenarios. This may be where business rules meet technical requirements. For example, during this operation, one or more of the following may be defined: service level requirements (SLA); service charging models; option of defining policies for the service; and the use case type (eMBB. mMTC, URLLC). The SLA requirements may be one or more of jitter, latency, number of user equipment and bandwidth.

Current specifications for multi-vendor integration of service management tools focus only on service onboarding as the first step in the service lifecycle. The design of the service is assumed to be an offline task. While the external party, e.g. a service provider is able to contribute to the design of the service, the service provider undertakes for the service design an initial design in an offline design environment. The service provider will provide the design to the network provider for implementation. Currently, there is no framework for designing the service in an interactive manner and in a shared way between the two parties (for example service provider and network provider.

The design phase in the service preparation phase may be to prepare the respective service description and the related service model which describes the means of actualizing the service. This may be made up of one or more of: network services and respective network functions; resources; service level agreement; and one or more policies.

Standards specifications (e.g. ZSM 008) assume that the service is fully described to be onboarded, i.e. that the desired service models and the related resource requirements and mappings are already known.

The ETSI ZSM life cycle management specification begins with validating the service models which are already available in the catalogue. Currently, the service design and creation (SDC) does not design the service. Rather, it assumes a fully described service (through a service descriptor) for which it binds the resources to the service descriptor. As a result the current specifications refer to a single service descriptor without differentiation between the requirements specifications which are submitted as input into the service design process, the outcome of the service design and the service instantiation requirements.

Some embodiments support an open interface between the service design tools and the end-to-end service management tools to allow for service design to be done in an interactive manner between the service provider and the network provider with access to information about the interactive runtime environment. Such an open interface may need to be usable with different service providers.

Some embodiments may separate service design from onboarding and instantiation to allow for an external service design tool (SDT) to design a communication service. The SDT may allow the communication service in an interactive way with the network provider tools. The SDT may have access to information about the capabilities of the network. The SDT may have access to available resource facing services. The SDT may propose a service design. The SDT may check interactively what is possible in the network and/or what is not. Subsequent to the design process, the service may then be onboarded to a separate end-end service management domain.

The SDT may provide one or more of the following features:
The SDT takes requirements specifications and generates a service offer descriptor. This generation may be automatically carried out. The service offer descriptor is an artefact that describes the service from the consumer point of view. The requirement specifications may be provided from a human service designer or product manager via a user interface or by a computer generated requirement specification.
A service design interface is provided which allows interaction between the SDT and the end-to-end service management domain. It may be provided as a north bound interface (NBI) on the end-to-end service management domain, or its related service catalogue, over which the service offer is specified.
The SDT forwards its proposed service design in form of a service offer descriptor to the end-to-end service management domain for validation and registration.
The end-to-end service management domain validates the service offer descriptor in an interactive manner. This may be based on the information about the interactive runtime environment. The validation may be to confirm if the service as described by the service offer descriptor can be supported. If not, the end-to-end service management domain informs the SDT of the inability to support the service. The SDT may provide an updated service offer descriptor.
The service offer descriptor may include policies and conditions with which the service may be offered. The service offer descriptor may represent the part of the description of the implementable service that is exposed to the service consumer to be selected as the desired service to be instantiated.

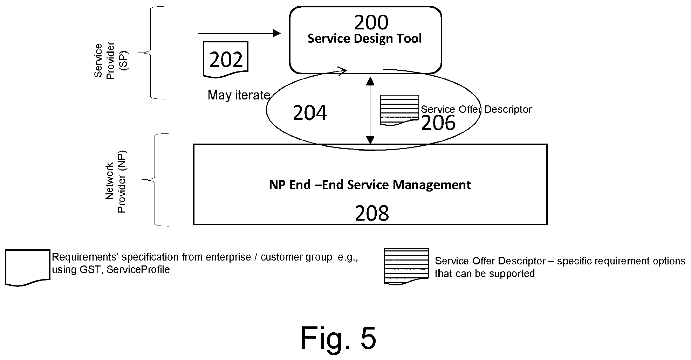

Reference is made to Figure 5 which schematically shows some embodiments. A service design tool 200 is provided. The service design tool may be associated with the service provider SP. The service design tool is provided with a requirement specification 202. The requirement specification may be provided by an enterprise (business) and/or by a customer. This may be provided using a template and/or a service profile. The service may be any suitable network service. By way of example only the, the service may be a network slice instance or other suitable service. Where the service is provided using a network slice, the requirement specification may use a network slice template.

An interface 204 to the network provider NP end-to-end service management 208 is provided. The service design data model 206 (called the service offer descriptor) may be followed for a seamless integration between network and service automation frameworks/solutions. The service offer descriptor has specific requirement options which can be supported. This may lead to better compliance with some requirements of for example, a 5G Ecosystem. This may provide an improved interoperability between different service providers and the network provider.

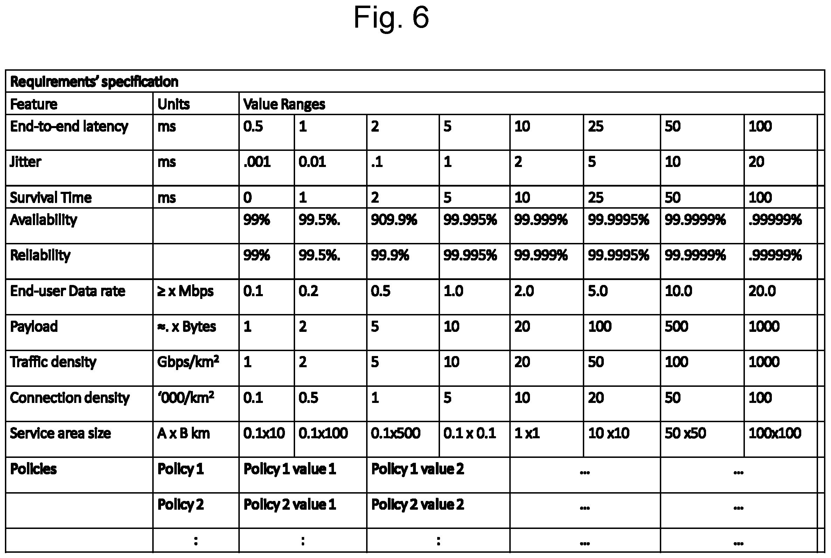

Reference is made to Figure 6 which shows a table of an example of a requirements specification. This table specifies the requirements for end-to end-to-end latency, jitter, survival time, availability, reliability, end-user data rate, payload, traffic density, connection density, service area size, and policies. The requirements specification is the input to the service design process (service design tool) and is the list of service characteristics, features and/or policies. These may be required for one or more groups of similar service consumers, e.g. a group of related enterprises.

An example of a service consumer group could be a group of fleet management enterprises such as car hire companies, car manufacturers and trucking companies. The requirements specification may be provided by the service provider organization. The requirements specification may be specified by a user and/or by a computer.

The requirements specification may include a set of one or more policies. The one or more policies may be applicable for the planned service. One or more candidate policy values may be provided from which the supported policies will be selected. A policy value may be binary (for example supporting yes/no options) or non-binary categorical values. An example policy may for example be "handover shall be supported" with the possible values being "yes" or "no". Another example policy may be linked to the breach of the availability attribute (e.g. Availability < 99%'), which would lead to triggering a scaling out action (e.g. if scaling_criteria == true && scaleout_threshold == true then xnf_scale_out)

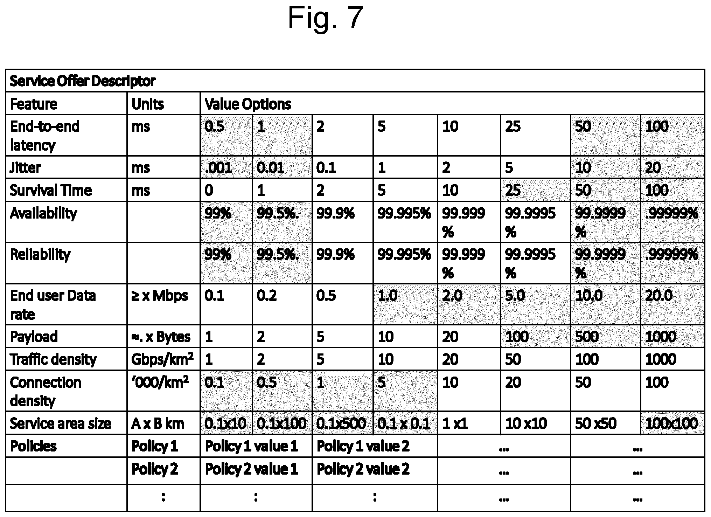

Reference is made to Figure 7 which shows a table of an example of the service offer descriptor. The service offer descriptor is the outcome of the service design process. The service offer descriptor is a list of service characteristics, features and policies that are required and are confirmed to be supported by the network. It is agreed between the service provider and the network provider. The service offer descriptor contains the service description to be exposed to the service consumers and which the service consumers will use to select the specific service to be instantiated. As can be seen from Figure 7, the attributes of the service offer descriptor are the same as those for the requirements specification, but the candidate values of each such attribute have been reduced to only indicate those that can be supported by the network. This applies to the policy values which are reduced to only indicate those policies that can be supported by the network. In the table of Figure 7, for example, the greyed-out values are those that cannot be supported.

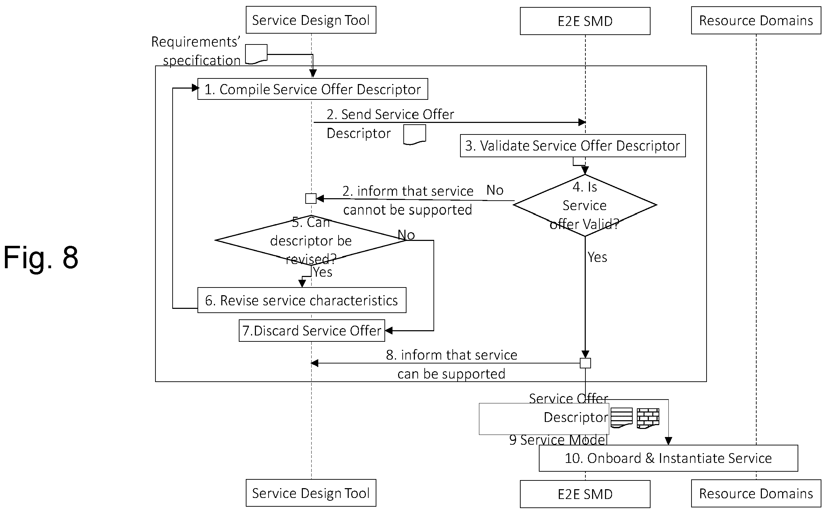

To initiate the design process, the service design tool (SDT) receives the requirements specification filled with the desired values for the attributes, after which the end-end process is as follows. In this regard, reference is made to Figure 8 which shows the service design operations.

In step 1, the service design tool compiles the service offer descriptor. This will be described in more detail later. This is based on the received requirements specification.

In step 2, the service design tool forwards the service offer descriptor to the end-end service management domain for validation. The forwarded service offer descriptor may include a service offer descriptor identifier. The identifier may comprise the service provider name and the time it was generated e.g. XYZ_240320211528. The identifier may be any other suitable identifier in other embodiments. The identifier may be used in the communications back to the SDT.

In step 3, the end-to-end service management domain checks the validity of the service offer descriptor to confirm if the stated service characteristics can be implemented / supported by the network. The validation check may include a check of the policies.

In step 4, if the service offer descriptor cannot be supported, the end-to-end service management domain sends an indication that service can be supported or not. The indication may be a simple message to state that the service offer descriptor cannot be supported, or it may be a report that shows which specific attributes and/or attribute value(s) cannot be supported. Where the service offer descriptor cannot be supported, the next step is step 5. Where the service offer descriptor can be supported, the next step is step 8.

In step 5, on receiving an indication that the described requirements in the service offer descriptor cannot be supported, the SDT checks if the service requirements can be revised. For example this may be the case where some but not the whole range of values specified by the service provider have been indicated by the SDM as not supportable. If the service requirements can be revised, the next step is step 6. If the service requirements cannot be revised, the next step is step 7.

In step 6, if the service requirements can be revised, the SDT revises the service requirements. The SDT recompiles the service offer descriptor to reinitiate the service offer validation process. In other word, the method reverts to step 1. The process iterates until a confirmation that service offer descriptor can be supported or until the SDT realizes that the service requirements cannot be revised.

In step 7, if the service requirements cannot be revised, i.e. the SDT realizes that the desired range of consumer requirements cannot all be supported, the SDT discards the service design process and sends an indication to the service design initiator that no service within the stated requirements can be supported.

In step 8, if service offer descriptor can be supported, the end-to-end service management domain sends an indication to the SDT that the service can be supported and the end-to-end service management domain triggers onboarding of the service models in step 9.

In the simplest implementation, the initial service offer descriptor may be exactly the same as the requirements specification. More complex implementations may however add extra requirements. For example, a plurality of potentially distinct service products may be required to be derived. In this scenario, the service design tool will look for the most distinguishing features along which the attributes may be differentiated. For example, the service design tool will (for the different dimensions of the service offer descriptor) divide the dimension into the multiple categories and compile one product for each such category

For the given attributes and attribute values in the service offer descriptor the end-to-end service management domain compiles a candidate service model which is the combination of resources needed to realize the service. This candidate service model may be initialized with an existing service model for a different service which is then edited to match the service model to the service descriptor. The candidate service model may be based on a template in some embodiments. In some embodiments, the model may be designed without using an existing service model or template.

Then, for the derived service model, the end-to-end service management domain checks the resources of the corresponding domains to see if those resources are available as described in the service model. The end-to-end service management domain checks the policies as described in the service offer descriptor to see if the selected network resources support those policies.

An example message for the indication of the support for the service offer descriptor is shown below:
Support for Service Offer Descriptor Indication
Service Offer Descriptor Identifier: XYZ_240320211528
Service Offer Descriptor Supported: Yes/No
Attribute_1_Name: Supported/ NotSupported
   Value 1: Supported
   Value 1: NotSupported
   Value 1: NotSupported
Attribute_2_Name:
   Value 1: Supported
   Value 2: Supported
   Value 3: Supported

This message may indicate one or more of the service offer descriptor identifier and information indication if the service offer descriptor can be supported by the network provider. The message may include an indication as to whether one or more individual attributes and/or the specific values thereof are supported.

The revision to the service offer descriptor may require reducing or shifting the window of attribute ranges that are needed to be supported. For a given attribute, the SDT may choose to eliminate one or more values from the set of values being requested for that attribute. For example, if on the first request an attribute "Payload" was requested with five value [1, 2, 5, 10, 20], the revision may reduce this set to [1, 2, 5, 10], or shift the set of values to [2, 5, 10, 20, 50].

Some embodiments may enable an external service design tool to iteratively design and describe a service which is then onboarded and instantiated by a service management domain tool.

Some embodiments may enable separate and multi-vendor tools to be used by the service provider and network provider organizations but still be able to accomplish the iterative service design.

Some embodiments may allow all the exchange to be done over a simple open interface.

The service design tool may be provided by an apparatus such as discussed in relation to Figure 2. The apparatus may be a computing device or provided in a computing device.

The end-to-end service management entity may be provided by an apparatus such as discussed in relation to Figure 2. The apparatus may be a computing device or provided in a computing device.

In some embodiments, the service provider and the network provider may be different providers. In other embodiments, the service provider and the network provider may be the same provider.

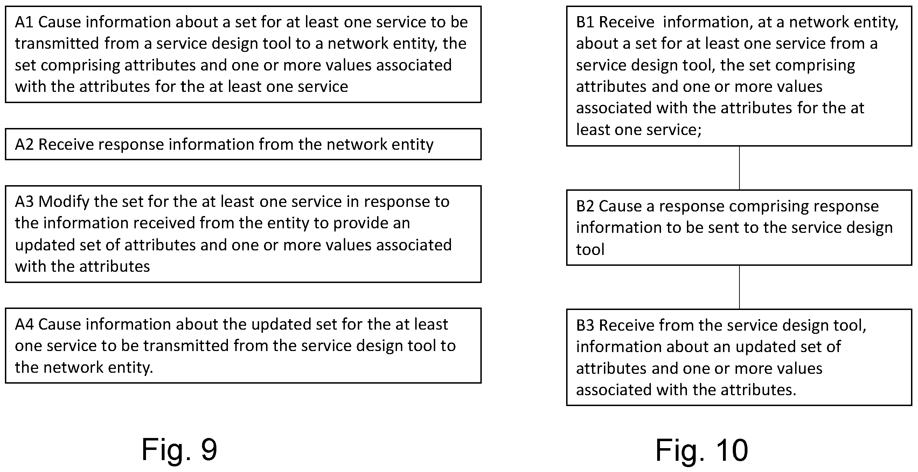

Reference is made to Figure 9 which shows a method. The method may be performed by an apparatus. This apparatus may be as described in relation to Figure 2. The apparatus may be provided in or by a service design tool.

The method comprises in step A1 causing information about a set for at least one service to be transmitted from a service design tool to a network entity. The set comprises attributes and one or more values associated with the attributes for the at least one service.

The method comprises in step A2 receiving response information from the network entity.

The method comprises in step A3 modifying the set for the at least one service in response to the information received from the entity to provide an updated set of attributes and one or more values associated with the attributes.

The method comprises in step A4causing information about the updated set for the at least one service to be transmitted from the service design tool to the network entity.

Reference is made to Figure 10 which shows a method. The method may be performed by an apparatus. This apparatus may be as described in relation to Figure 2. The apparatus may be or provided in an entity. The apparatus may be or provided in end-to-end service management domain entity.

The method comprises in step B1 receiving information, at an entity, about a set for at least one service from a service design tool. The set comprises attributes and one or more values associated with the attributes for the at least one service.

The method comprises in step B2 causing a response comprising response information to be sent to the service design tool.

The method comprises in step B3 receiving, from the service design tool, information about an updated set of attributes and one or more values associated with the attributes.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 9 and 10, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising means configured to:
cause information about a set for at least one service to be transmitted from a service design tool to a network entity, the set comprising attributes and one or more values associated with the attributes for the at least one service;
receive response information from an entity;
modify the set for the at least one service in response to the information received from the entity to provide an updated set of attributes and one or more values associated with the attributes; and
cause information about the updated set for the at least one service to be transmitted from the service design tool to the entity.

2. The apparatus as claimed in claim 1, wherein the response information comprises information indicating that the service is not supportable.

3. The apparatus as claimed in claim 1 or 2, wherein the response information comprises information indicating which one or more attributes of the set and/or one or more values associated with the attributes of the set are not supportable.

4. The apparatus as claimed in any preceding claim, wherein the means are configured to receive a requirements specification and in response to provide the information about the set for the at least one service.

5. The apparatus as claimed in claim 4, wherein the providing of the information comprises compiling the requirements specification to provide the information.

6. An apparatus comprising means configured to:
receive information, at an entity, about a set for at least one service from a service design tool, the set comprising attributes and one or more values associated with the attributes for the at least one service;
cause a response comprising response information to be sent to the service design tool; and
receive, from the service design tool, information about an updated set of attributes and one or more values associated with the attributes.

7. The apparatus as claimed in claim 6, wherein the means are configured to determine that the service is not supportable, the response information indicating that the service is not supportable.

8. The apparatus as claimed in claim 6 or 7, wherein the response information comprises information indicating which one or more attributes of the set and/or one or more values associated with the attributes of the set are not supportable.

9. The apparatus as claimed in any preceding claim, wherein the information about the set comprises information identifying the attributes and for each attribute information identifying the one or more associated values.

10. The apparatus as claimed in any preceding claim, wherein the information about the set comprises identity information and the response information may comprise the identity information.

11. The apparatus as claimed in any preceding claim, wherein the information about the set comprises a service offer descriptor for the at least one service.

12. The apparatus as claimed in any preceding claim, wherein the service comprises a network slice instance.

13. A method comprising:
causing information about a set for at least one service to be transmitted from a service design tool to a network entity, the set comprising attributes and one or more values associated with the attributes for the at least one service;
receiving response information from the network entity;
modifying the set for the at least one service in response to the information received from the entity to provide an updated set of attributes and one or more values associated with the attributes; and
causing information about the updated set for the at least one service to be transmitted from the service design tool to the network entity.

14. A method comprising:
receiving information, at a network entity, about a set for at least one service from a service design tool, the set comprising attributes and one or more values associated with the attributes for the at least one service;
causing a response comprising response information to be sent to the service design tool; and
receiving, from the service design tool, information about an updated set of attributes and one or more values associated with the attributes.

15. A computer program comprising computer executable instructions which when run on at least one processor cause the method of claim 13 or 14 to be performed.
